# EUROPEAN PATENT APPLICATION

(11) **EP 1 291 403 A1**
(43) Date of publication of application: **12.03.2003**
(21) Application number: 01121444.2
(22) Date of filing: 07.09.2001
(51) Int. Cl.: C09J 7/02, B65H 37/04, B65H 39/14, B42D 5/02

(54) **Photoluminescent adhesvie tape**

(71) Applicant: 3M Innovative Properties Company, St. Paul, Minnesota 55133-3427 (US)
(72) Inventor: Congard, Pierre, 95280 Jouy-Le-Moutier (FR); Gross, Bernd, 40789 Monheim (DE); Otte, Mario, 40699 Erkrath (DE)
(74) Representative: Wilhelm, Stefan M.

(57) **Abstract**

The present invention relates to a photoluminescent adhesive tape comprising a photoluminescent agent, two exposed adhesive layers and an intermediate backing layer. The invention also describes a method for using such an adhesive tape that allows recognition of an adhesive tape on a substrate by exposing the adhesive tape to electromagnetic radiation and detecting a responsive radiation with a photocell. By utilizing this method, the invention offers a method for attachment of two substrates to one another which is of improved reliability and efficiency.

## Description

### Field of the invention

The present invention relates to a photoluminescent adhesive tape comprising a photoluminescent agent, two exposed adhesive layers and an intermediate backing layer. The invention also describes a method for using such an adhesive tape that allows recognition of an adhesive tape on a substrate by exposing the adhesive tape to electromagnetic radiation and detecting a responsive radiation with a photocell. By utilizing this method, the invention offers a method for attachment of two substrates to one another which is of improved reliability and efficiency.

### Background

It has become commonplace to send data-bearing cards such as credit cards, bank cards, identification cards, insurance cards and driver's licenses, for example, via postal services to their prospective end-users. The data cards may be quite valuable in that they may allow access to certain privileged or personal information and/or enable transfer of funds. Thus, it is of importance that such data cards reach the prospective end-user in a secure and recognizable format. For example, the cards are often attached to a substrate such as a carrier sheet presenting the data card to the end-user and describing the nature and use of the card. Additional advantages of securing a data card to a substrate include preventing a magnetic stripe, if present, from sustaining damage by abrasion during transit and securing the data card in a location on the substrate where it can be observed through a transparent window in a mailing envelope, for example. It is also important that the data card be detachable from the substrate with limited force and without damaging the data card or contaminating it with adhesive residues.

The invention may also be useful to attach rebate coupons to products in supermarkets for immediate detachment and redemption, for example. Free samples can be attached to larger product packages using the adhesive tape and/or methods of the present invention.

In recent years more emphasis has been placed on defect-free mailing devices and processes for distribution of data cards. Data cards that are not attached firmly in the correct location in a mailing device may be lost in the mail, misdirected and/or fall into the hands of those likely to abuse them.

Several methods for attaching data cards to substrates such as paper have been described. Mechanical attachment methods such as placing the card in a pre-formed paper or cardboard sleeve or placing each of the four corners of the data card in each of four slits in the substrate are common.

Data cards have also been attached to substrates using adhesives. Adhesives commonly used are hot-melt adhesive spots similar to those used to attach advertising or free samples in magazines. These adhesive may be dispensed in individual spots with a heated pistol or may be employed in the form of pre-formed spots of thermoplastic pressure-sensitive adhesive as described in US 5,935,670 (Downes).

Single-sided pressure-sensitive adhesive tapes comprising a backing have also been used to attach credit cards to mailers. EP 119 412 (Otto) describes the use of a single-sided pressure-sensitive adhesive tape used to completely cover and attach a credit card to a substrate. The adhesive tape covers and protects the front side of the card and does not come in contact with the magnetic stripe on the rear side.

WO 92//16447 (Barbieri) describes a credit card mailer having a transparent single-sided adhesive tape that holds the data card under a window in an envelope. The adhesive surface contacts the front side of the credit card.

DE 197 22 627 (Scholl) describes the use of an adhesive film for fastening a card bearing a chip or magnetic stripe to a substrate, where the adhesive film is attached to the substrate with an adhesive coating and the card is attached to the opposite surface of the adhesive film by mean of adhesive forces provided by a thin film of polyethylene, polypropylene, polyester, PVC or a mixture thereof. Inclusion of luminescent layer in the tape aids in sensing of the tape by labeling equipment. The adhesive tape is designed to bond the rear side of the data card to a sheet of paper using adhesive forces, but does not comprise an exposed pressure-sensitive adhesive layer on the surface of the tape which contacts the rear side of the data card which commonly bears a magnetic stripe.

Photoluminescent films are also known and are commercially used to provide signage that warns, cautions, and provides other messages conveying safety information. Sometimes these films are also characterized as "Glow-in-the-Dark", or "luminous" films. Frequently, these films are combined with a single layer of adhesive on one side to form a photoluminescent adhesive-coated sheet or an adhesive tape. Photoluminescent films and single-sided pressure-sensitive adhesive tapes can be found in commercial catalogs such as the Seton Identification Products Catalog (Seton Products, Branford CT, page AE33,1996); D&G Sian and Label Catalog WK (D&G Sign and Label, Northford, CT, page W37, (Summer 1996); and Brady-Signi-mark Division Catalog S-17 (W.H. Brady Co., Milwaukee, WI, p. 46,1996). Typical messages on such tapes and sheets include "Danger-- High Voltage"; "Exit"; "Fire Alarm"; "Fire Extinguisher"; "Oxygen No Smoking"; and the like.

US 2,333,641 (Corwin) describes an adhesive tape comprising a transparent backing layer coated on one side with a pressure-sensitive adhesive layer where the pressures-sensitive adhesive comprises a luminous material.

US 5, 468, 532 (Ho et al) describes a multilayer PVC-free film based graphic article bearing an adhesive on one side. The backing layer may comprise fluorescent pigments.

EP 733 483 describes thin strips of fluorescent tape with adhesive on one side, provided in a small hand dispenser, for use as a highlighter for marking of printed texts.

US 5,149,139 describes a postage stamp backed with a water-soluble glue where the glue has a fluorescent additive. Postage stamps that are removed from letters by soaking in water and reused are identified by an optical recognition device as fraudulent due to the absence of the fluorescent glue.

GB 2 064 614 describes a contact transfer printing ribbon which transfers fluorescent pigments to the surface of documents so they can be sorted using optical recognition devices.

EP 704,510 (Yyonetani) describes a phosphorescent adhesive-coated article. The sheet comprises a clear layer, a phosphorescent layer comprising strontium aluminate-based lumiphores, a reflective layer comprising white pigments and a single layer of pressure-sensitive adhesive, in the order given.

Photoluminescent films bearing a pressure-sensitive adhesive layer on the non-luminous surface are commercially available from 3M as 3M™ Scotchcal™ Luminous Film Series 5700. Series 5700 film is an adhesive-backed film having excellent chemical and stain resistance and bears a light yellowish green, environmentally benign, photoluminous major surface. Series 5700 films are phosphorescent films that provide a luminosity that lasts up to six hours after photon excitation in the film ends.

Thus in spite of the availability of a variety of systems for attaching credit cards to mailers, there still is a need for an easy-to-use adhesive attachment system for data cards which adheres the magnetic stripe bearing side of the data card firmly and reliably to a substrate and allows the card to be removed from the substrate without adhesive resides, while at the same time providing additional characteristics which allow the presence of the adhesive attachment system to be verified during automated attachment processes. Other objects of the present invention can be taken from the following description of the invention.

### Brief summary of the invention

The present invention describes a photoluminescent adhesive tape, having a first layer of exposed adhesive attachable to a first substrate, a backing layer and a second layer of exposed adhesive attachable to a second substrate, where the second layer of exposed adhesive comprises a pressure-sensitive adhesive being selected so that the tape can be removed according to FINAT Method 2 (90° peel adhesion) from the second substrate without leaving any residue, and said tape comprising at least one photoluminescent agent.

Then invention also describes an assembly comprising a first substrate and second substrate, where said substrates are adhered to one another by means of the photoluminescent adhesive tape of the present invention.

Finally, the invention describes a method of adhering two substrates to each other comprising the steps of a) providing a first substrate, b) providing the photoluminescent adhesive tape of the present invention, c) adhering said adhesive tape to the first substrate by means of the first exposed adhesive surface, d) exposing the adhesive tape to electromagnetic radiation capable of exciting the photoluminescent agent, e) verifying the presence of the photoluminescent adhesive tape on the first substrate by means of a photocell, f) providing a second substrate and g) adhering the second substrate to the first substrate bearing said adhesive tape by means of the second adhesive layer.

### Brief description of the figures

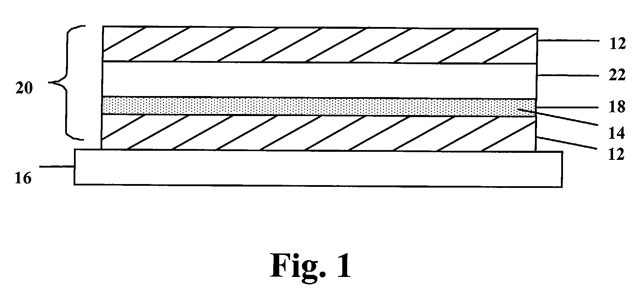

FIGURE 1 shows a schematic cross-sectional diagram of the photoluminescent tape 20 comprising a backing layer 22 having an adhesive layer 12 on one major surface, and having an ink layer 18 comprising a photoluminescent agent 14 and a layer of pressure-sensitive adhesive 12 on a second major surface. The photoluminescent adhesive tape 20 is shown supported on a release liner 16.

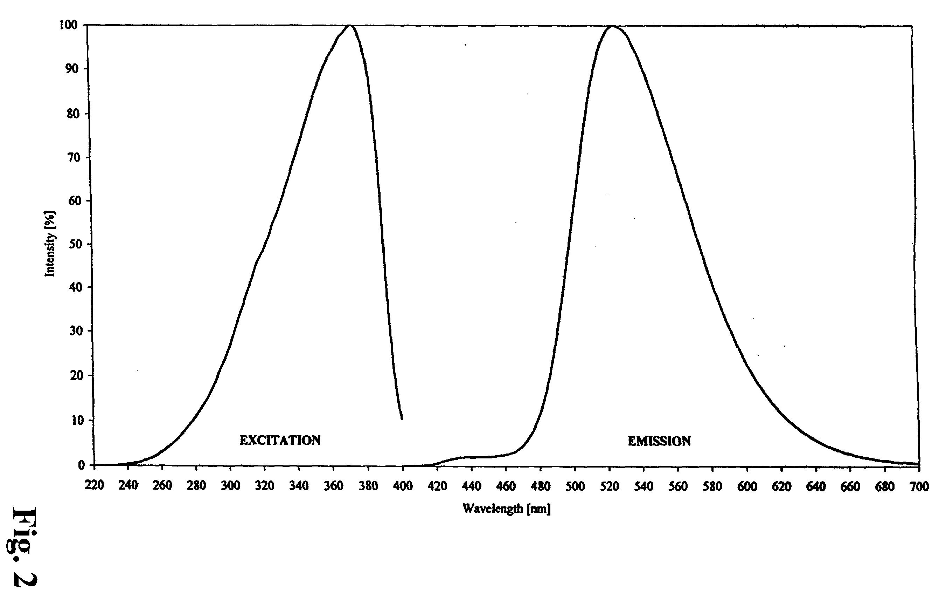

FIGURE 2 shows both the ultraviolet excitation spectrum and the fluorescent emission spectrum of Colorless Fluorescent Yellow 81A001 F which is a preferred photoluminescent agent in the present invention.

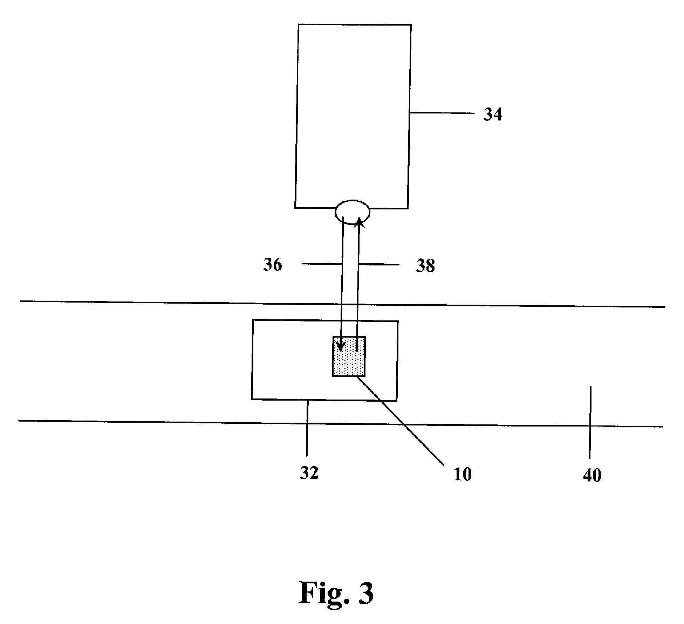

FIGURE 3 depicts the photoluminescent adhesive tape 10 attached to a first substrate 32 by means of the first exposed adhesive surface and moving past an optical recognition device 34 comprising both a radiation source of UV light 36 and a photocell to detect fluorescent emission 38 while supported on an assembly line belt 40.

### Detailed description of the invention

The photoluminescent tape of the present invention comprises a first layer of exposed adhesive attachable to a first substrate, a backing layer and a second layer of exposed adhesive attachable to a second substrate, where the second layer of exposed adhesive comprises a pressure-sensitive adhesive being selected so that the tape can be removed according to FINAT Method 2 (90° peel adhesion) from the second substrate without leaving any residue, and said tape comprising at least one photoluminescent agent.

The adhesive material selected for the first adhesive layer may be any adhesive material capable of forming an adhesive bond with the first substrate. The adhesive may be selected from a large group of materials comprising normally tacky pressure-sensitive adhesives; heat-activated adhesives that are not tacky under ambient conditions; moisture-activated adhesive or glues such as commonly employed on postage stamps; and curable adhesives such as moisture-curing adhesives, heat-curable adhesives, two-part room-temperature curable adhesives, anaerobic-cure adhesives and UV-curable adhesives.

The first adhesive layer preferably comprises a pressure-sensitive adhesive (PSA). Any of a wide variety of pressure-sensitive adhesives may be employed as the first adhesive layer in the photoluminescent adhesive tape of the present invention. These include, but are not limited to pressure-sensitive adhesives based on natural rubber, synthetic rubbers, polyurethanes, silicones, acrylics, vinyl ethers and polyolefins. Pressure-sensitive adhesive compositions may include modifiers such as tackifiers, plasticizers and fillers, for example. Typical pressure-sensitive formulations are described in detail in The Handbook of Pressure Sensitive Adhesive Technology, Third Edition, edited by D. Satas, Satas and Associates, Warwick, Rhode Island, USA (1999).

Especially preferred as pressure-sensitive adhesives for use as the first adhesive layer are selected from the group consisting of acrylate-based pressure-sensitive adhesives and rubber-resin based pressure-sensitive adhesives.

The first adhesive layer preferably has a thickness of from 5 µm to 100 µm, preferably 10 µm to 50 µm. The first adhesive layer may also be either continuous or discontinuous layer. The first adhesive layer may also optionally be provided with microstructures on its exposed surface to provide additional benefits such as air-bleedability and/or temporary repositionability of the adhesive layer.

The second layer of exposed adhesive is selected so that the adhesive tape can be removed according to FINAT Method 2 (90° peel adhesion) from the second substrate without leaving any macroscopic adhesive residue.

The adhesive for use as the second adhesive layer of the present invention is preferably selected to have an acceptable balance of adhesion to the substrate to prevent the second substrate from being released prematurely and cohesive forces to prevent leaving residue on the second substrate.

Good adhesion to a particular substrate can be obtained, for example, by optimizing properties such as, for example, softness of the pressure-sensitive adhesive or its ability to wet the substrate in question in view of the polarity of the substrate. High cohesive strength in adhesive materials can be provided, for example, through employing high molecular weight polymers, cross-linked polymers and/or inclusion of polar copolymers in acrylate-based pressure-sensitive adhesives.

It has been found by the present inventors that certain removable pressure-sensitive adhesives, for example, display such a combination of adhesive characteristics and that these are partcularly suitable for bonding substrates such as data cards in a firm, but residue-free, releasable fashion. Such adhesives are described, for example, in detail in U. S. Patent Nos. 3,691,140 (Silver); 4,166,152 (Baker); 5,571,617 (Cooprider) and 5,756,625 (Crandall), for example.

Preferably the second layer of pressure-sensitive adhesive is selected so that the tape can be removed according to FINAT Method 2 (90° peel adhesion) from a polycarbonate substrate. Polycarbonate is commonly used in the data card industry and pressure-sensitive adhesive layers found to be removable from polycarbonate have been found by the inventors to be removable from other substrates employed in the data card industry including polyvinyl chloride (PVC), polyesters such as polyethylene terephthalate (PET, PETG, PETF), polystyrene (PS), acrylonitrile-butadiene-styrene polymers (ABS) and polyolefins such as polyethylene (PE) and polypropylene (PP). Removablility from polycarbonate can therefore be used as a guideline as to adhesion behavior toward other substrates commonly encountered in data cards.

The second adhesive layer may also optionally be provided with microstructures on its exposed surface to provide additional benefits such as air bleedability and/or temporary repositionability of the adhesive layer.

The photoluminescent adhesive tape of the present invention preferably exhibits specific relative bond strengths to the first and second substrates, respectively. The adhesive peel strength of the first adhesive layer from the first substrate is preferably selected to be greater than the adhesive peel strength of the second adhesive layer from the second substrate. Specifically, it is preferred that the peel adhesion of the first adhesive layer from the first substrate be at least 1 N/cm, more preferably at least 2 N/cm and especially preferably at least 2.5 N/cm greater than the peel adhesion of the second adhesive layer from the second substrate, as measured according to FINAT Method 2 (90° Peel Adhesion). This relationship of adhesive peel strengths is preferred, for example, when attaching a second substrate such as a credit card to a first substrate. It is preferred that the adhesive tape remains with the first substrate when the data card, for example, is detached. This insures that that the tape need not be removed separately from the data card and reduces the probability that the adhesive tape might interfere with the use of the data card in conjunction with automatic card readers, for example.

This peel strength relationship, which can be referred to as "differential adhesion", may be ensured by several methods. One way of ensuring the preferred differential adhesion described above is to provide two chemically-differing PSAs on each major surface of a backing, respectively. One could select a more aggressive pressure-sensitive adhesive for bonding to a first substrate and an inherently weaker pressure-sensitive adhesive for bonding to a second substrate, for example.

A second method of providing the differential adhesion preferred is to select a single PSA (coated on each side of a backing) which has an inherently different adhesion level to two differing substrates, respectively. A third method of providing differential adhesion is to provide one PSA as a continuous layer on one side of a backing and as a discontinuous layer on the opposite side of the backing. A fourth method of providing differential adhesion is to add filler to one of the adhesive layers or reduce the tack of one of the adhesive surfaces with, for example, talc or fumed silica.

The strength of the pressure-sensitive adhesive bond between the second adhesive layer and the second substrate as measured by 90° peel adhesion is preferred to be, on the one hand, such that the second substrate is reliably and securely bonded to the first substrate. On the other hand, this bond strength is preferred to be low enough that it can be broken easily by hand by the end-user. Preferably, the peel adhesion of the second adhesive layer from the second substrate as measured by FINAT Method 2 (90°peel adhesion) is not more than 2.0 N/cm, more preferably not more than 1.5 N/cm and especially preferably not more than 1.0 N/cm.

The photoluminescent adhesive tape of the present invention also comprises a backing layer interposed between the first and second layers of exposed adhesive. The backing layer may comprise any known backing layers used in the adhesive tape industry including, but not limited to, papers, polymeric films, metal foils, woven-webs, non-woven webs, scrims and multilayer laminates such as polymer-coated papers, for example. Preferred backing layers are polymeric films including plasticized polyvinyl chloride (PVC), cellulose acetate, polyethylene terephthalate (PET) and polyolefins such as polyethylene (PE) and polypropylene (PP). Backing layers suitable for use in the present invention preferably have a thickness of between 10 µm and 250 µm. A thickness in the range of 20 µm to 100 µm is more preferred. The backing layer may be transparent, translucent or opaque. In tape embodiments where an overall transparent tape construction that has an "invisible" look and limited visual attention-attracting character is desired, it is preferred that the backing is transparent or translucent.

Additional non-exposed layers may be included in the tape of the present invention to provide special features such as the ability to split cohesively within one of the non-exposed layer or at one of the interfaces between two adjacent non-exposed layers of the tape when the adhesive tape is bonded between two substrates to form an assembly and when separation forces are applied to the two substrates.

Such splittable tapes, described, for example, in WO 00/46196 (Congard et al), comprise a non-exposed layer which has poor adhesion to the backing or to another layer. Specifically, WO 00/46196 discloses a splicing tape comprising a carrier layer having on a first major surface an adhesive layer and on a second major surface opposite to the first major surface in the order given a non-tacky polymer layer and a second adhesive layer, the splicing tape being capable of delamination between the carrier layer and the non-tacky polymer layer, with the proviso that the carrier layer and the non-tacky layer are not coextruded layers. Thus there is a predetermined interface in the adhesive tape at which failure occurs when separation forces are applied to the assembly comprising the adhesive tape sandwiched between two substrates. It is preferred that, after the splitting failure occurs, the two new exposed surfaces generated by the splitting are not tacky to the touch. A splittable tape of this type might be employed, for example, in applications where it is not objectionable to have a portion of the adhesive tape remain adhered to each of the two substrates employed.

Additional non-exposed layers may also comprise a weak paper layer, such as a tissue paper layer, for example, which splits cohesively when separation forces are applied to the assembly comprising the adhesive tape sandwiched between two substrates. Adhesive tapes that have such a weak cohesively splittable, paper layer are disclosed, for example, in US Pat No. 5,916,651 (Nootbaar) which specifically describes a paper carrier coated on both sides by a water-soluble acrylic pressure-sensitive adhesive. The paper carrier is selected to be a weak splittable paper such as tissue paper.

In certain applications where a colored photoluminescent adhesive tape is desired for aesthetic or functional reasons, a colored pigment may be employed in the backing layer or another layer, providing that the added pigment does not interfere with the optical recognition of the adhesive tape by a photocell.

The photoluminescent adhesive tape of the present invention may comprise still further layers, including additional backing layers, adhesive layers, primers (adhesion promoters) and/or release agents. These may be present to improve handleability and converting characteristics of the adhesive tape or to serve as carrier layers for colored pigments and/or photoluminescent agents. Such additional layers may also modify the adhesion of one layer to another. Other layers, if present, are preferred to have optical characteristics and geometrical arrangement within the adhesive tape construction such that they do not interfere with the optical recognition of the adhesive tape by a photocell.

The photoluminescent adhesive tape of the present invention also comprises at least one photoluminescent agent.

A "photoluminecent agent" is defined herein as any luminescent material which can be caused to luminesce by excitation with light.

"Luminescence", in turn, encompasses both fluorescent or phosphorescent emission in the visible portion of the electromagnetic spectrum from about 400 nm to about 700 nm.

"Fluorescent" is used herein to describe a material that emits electromagnetic radiation, especially in the form of visible light, as the immediate result of and only during the absorption of radiation from some other source. More specifically, "fluorescence" is defined as emission of a photon from a substance, occurring as a result of a spin conserving transition from an excited electronic state to a lower energy electronic state. In the present invention, any material that is covered by one of the above definitions is referred to as "fluorescent".

"Phosphorescent" is used herein to describe a material that emits light in the visible range even long after the radiation source has been removed. Phosphorescent substances are those typically employed in "glow-in-the-dark" novelty articles and safety devices. "Phosphorescence" is defined herein as the emission of a photon from a molecule, occurring as a result of a non-spin conserving transition from an excited electronic state to a lower energy electronic state. In the present invention, any material that is covered by one of the above definitions is referred to as "phosphorescent".

Substances that luminesce above 350 nm, particularly those that luminesce in the visible range (about 400 nm to 700 nm), preferably comprise particular moieties in their chemical structure. These moieties are preferably aromatic in character and may be a hydrocarbon or a heterocyclic compound and also may have a multi-ring structure. Examples of aromatic groups that, when properly substituted, may be luminescent are phenyl, naphthyl, quinolyl, pyridyl, furyl, etc., and their corresponding polyvalent groups.

More specific chemical classes which are known to fluoresce include benzoxazinone, terephthalic acid derivatives, pyrazilone derivatives, oxinates, aldazine derivatives, benzthiazol derivatives, thioxanthene derivatives, salicylic acid derivatives, anthranilic acid derivatives, coumarine derivatives and barbituric acid derivatives

Other components that can fluoresce or phosphoresce in the visible part of the spectrum include highly purified inorganic materials doped with small quantities of activators. The inorganic materials can be divided into several groups according to the color of their fluorescence. Examples of materials which show a white-blue fluoresence are Y₂ SiO₅: Tb,Ce ; ZnS:Ag ; BaMg₂Al₁₆O₂₇:Eu and Sr₅(PO₄)₃Cl:Eu. Materials which show green-yellow fluorescence include ZnS:Cu ; ZnSiO₄:Mn and BaMg₂Al₁₆O₂₇:Eu,Mn. Examples of substances that fluoresce in the orange-red range are CaSiO₃:Mn,Pb ; ZnS:Mn ; La₂O₂S:Eu ; YVO4:Eu ; Y₂O₂S:Eu and Y₂O₃:Eu. Powders of minerals such as willemite, among many others materials, are also known to photoluminesce and can be employed as photoluminescent agents in the present invention. Both the inorganic and organic materials are available commercially from, for example, Honeywell Specialty Chemicals, (Seelze, Germany) (formerly Allied Signal / Riedel-de Haen GmbH) under the name Lumilux™.

Any photoluminescent agent can be employed in the present invention that is capable of emitting light that can be detected by an optical recognition device comprising a photocell. However, it may be desirable to make specific adaptations of the invention when the photoluminescent adhesive tape is adhered to a first substrate that has inherent photoluminescence. Many grades of paper, for example, comprise photoluminescent additives such as surfactants, whiteners and optical brighteners in amounts that give them a substantial inherent photoluminescent character of their own. When using such paper sheets as first substrates, photoluminescent agents are preferably selected which can be detected even when background emissions from the paper substrate are present. This is accomplished in practice by evaluating the emission spectrum of the first substrate and then selecting a photoluminescent agent for the adhesive tape that has an emission at a wavelength differing from the main emissions of the first substrate. For example, if the paper has a strong fluorescence at 400 nm, one could choose a photoluminescent agent for the adhesive tape that has substantial emission at 600 nm, for example. The photocell in the optical recognition device may be equipped with optical filters so that emissions from the first substrate are reduced or prevented entirely from reaching the photocell.

This wavelength or wavelength range, respectively, selected for the observation of emission from the photoluminescent adhesive tape is then defined as the "recognition wavelength". In general, it is also preferred that the emission of the photoluminescent agent has a magnitude of at least twice that of any background photoluminescence from the first substrate at the recognition wavelength. Preferably, the emission of the photoluminescent agent has a magnitude of four times that of any photoluminescent emission from the first substrate at the recognition wavelength.

The amount of one or more photoluminescent agents incorporated into the adhesive tape is selected according to the individual properties of the photoluminescent agents employed and according to any background photoluminescence from the first substrate, if present. Levels of photoluminescent agent may be as low as 0.001 weight % based on the total weight of the adhesive tape. A preferred amount of photoluminescent agent is 0.01 to 5.0 weight % based on the total weight of the adhesive tape and a more preferable amount is 0.1 to 2.0 weight % based on the total weight of the adhesive tape.

The photoluminescent agent may be employed in any such geometrical arrangement and in such amount in the adhesive tape so that it can be observed effectively by the recognition device employed in the present invention, namely a photocell. The photoluminescent agent may be contained within an adhesive layer, within the backing layer or in another additional layer of the adhesive tape, such as a photoluminescent ink layer, for example.

If, for example, the photoluminescent agent is located within the backing layer, then the second adhesive layer for attachment of the second substrate is preferably transparent. "Transparent" is defined herein as having the ability to transmit both the exciting radiation and the emitted radiation in the photoluminescence process to the extent of not less than 60%, preferably not less than 70%, more preferably not less than 80% and especially preferred to an extent of not less than 85%, as determined by ASTM Method D1746-97. This allows the exciting light and the emitted light from the photoluminescent agent to pass through the adhesive layer and allows the adhesive tape to be recognized by the optical recognition device.

Independently of the specific construction of the photoluminescent adhesive tape, the use of transparent adhesive layers is preferred.

The photoluminescent agents employed in the adhesive tape of the present invention are preferably provided in an additional layer comprising a photoluminescent ink. Photoluminescent inks are available commercially from Casco Novel GmbH (Essen, Germany), Marabuwerke GmbH (Tamm, Germany) and SICPA Security Inks Division (Lausanne, Switzerland) and comprise photoluminescent substances dissolved or suspended in a combination of solvents, suspending agents and binder resins. Preferred thickness of the photoluminescent ink layer is 1 µm to 20 µm, more preferably 2 µm to10 µm. When an additional layer of photoluminescent ink is employed, it is preferably located directly adjacent to either side of the backing layer.

The exposed adhesive layers of the photoluminescent adhesive tape of the present invention are preferably covered and protected by at least one release liner prior to use and/or while the adhesive tape is wound up in roll form. Release liners are well known in the pressure-sensitive adhesive tape industry and serve to support and protect pressure-sensitive adhesive layers from contamination and to prevent rolls comprising multiple windings of adhesive tape from adhering to each other when the tape is stored in roll form. Release liners commonly comprise papers or polymeric films. These may be treated with adhesion-repellent polymers such as silicones or may comprise such materials that have inherently low adhesion to pressure-sensitive adhesive materials. Non-limiting examples of release liners include silicone-coated kraft paper, silicone-coated polyethylene coated paper, silicone-coated or non-silicone-coated base materials such as polyethylene or polypropylene, as well as the afore-mentioned base materials coated with polymeric release agents such as silicone ureas, urethanes, and long chain alkyl acrylates, such as defined in U. S. Patent Nos. 3, 957,724; 4,567,073; 4,313,988; 3,997,702; 4,614,667; 5,202,190; and 5,290,615.

Photoluminescent adhesive tapes of the present invention may be manufactured by practices employed in the adhesive tape industry for double-coated adhesive tapes.

Double -coated adhesive tapes bearing an adhesive layer on each major surface of an intermediate backing layer may be prepared by casting layers of solvent-borne or water-borne adhesives directly onto backings or intermediate release liners and then removing the solvent or water by drying. Adhesive layers may be prepared by hot-melt coating adhesives directly onto backings or intermediate release liners. Alternatively, adhesive layers may be prepared by on-web UV polymerization of monomers as described, for example, in U. S. Patent No. 4,181,752 (Martens). The adhesive layer(s) may be applied to the backing in a continuous or discontinuous fashion using common techniques such as knife coating, engraved roll (gravure) printing, rotary screen printing, spraying or hot-melt coating. Alternatively, adhesives may be polymerized in place on the backing by on-web UV polymerization techniques as mentioned above.

In certain cases, a primer or adhesion promoter may be applied to the backing layer before application of the adhesive layer and/or photoluminescent ink layer to insure adequate anchorage of the adhesive or ink layers to the backing layer. Common methods for priming backing layers include flame treatment, air or nitrogen corona treatment and/or application of chemical primers.

Photoluminescent agents may be incorporated into the photoluminescent adhesive tape in any of several ways. Photoluminescent agents employed in the invention may be utilized in the form of insoluble powders or pigments and may be mixed into adhesive layers or backing layers of the adhesive tape during the processes of their preparation. Photoluminescent agents may also be provided as components of photoluminescent inks where the photoluminescent substance is provided in a supporting binder material comprising surfactants, suspending agent and polymeric matrices, etc. Photoluminescent agents can also be soluble in solvents and are commonly available as transparent inks that may be employed as a separate layer or added into other layers of the adhesive tape.

Employment of a separate layer of photoluminescent ink, such as those inks used for printing fluorescent or phosphorescent images onto papers or polymeric films, is a preferred method of providing the photoluminescent agent in the photoluminescent adhesive tape of the present invention. This separate layer of ink may be applied preferably onto to the backing layer and underlying an exposed adhesive layer. The ink may be applied in either a continuous or discontinuous fashion.

FIGURE 1 shows a schematic cross-sectional diagram of the photoluminescent tape 20, comprising a backing layer 22 having pressure-sensitive adhesive layer 12 on one major surface, and having an ink layer 18 comprising a photoluminescent agent 14 and a second layer of pressure-sensitive adhesive 12 on a second major surface. The photoluminescent adhesive tape 20 is shown supported on a release liner 16.

The present invention also describes an assembly comprising a first substrate and second substrate, where said substrates are adhered to one another by means of the photoluminescent adhesive tape of the present invention.

A preferred assembly of the present invention is one where the second substrate is a data card.

The substrates bonded to one another by means of the photoluminescent adhesive tape may be selected from glass, metal, painted metal, wood, polymeric materials, papers, cardboard, leather and fabric or any other surface to which an adhesive bond may be formed. The substrate may have a low relief pattern or may be embossed, but is preferred to be smooth to facilitate wetting and adhesive bonding. Preferably, the substrates comprise paper, polymeric films or multilayer laminates comprising polymeric films and/or papers.

The second substrate preferably comprises a polymeric material selected from a group of injection molded or extruded high-volume, low-cost industrial polymers commonly employed in the data card industry such as polyvinyl chloride (PVC), polycarbonate, polyesters such as polyethylene terephthalate (PET, PETG, PETF), polystyrene (PS), acrylonitrile-butadiene-styrene polymers (ABS) and polyolefins such as polyethylene (PE) and polypropylene(PP). The second substrate may also bear graphics, printing, electronic chips and/or magnetic stripes for storing data and may be embossed with card-holder names and account numbers, for example.

The invention also comprises a method for adhering two substrates to each other comprising the steps of a) providing a first substrate, b) providing the photoluminescent adhesive tape of the present invention, c) adhering said adhesive tape to the first substrate by means of the first exposed adhesive layer, d) exposing the adhesive tape to electromagnetic radiation capable of exciting the photoluminescent agent, e) verifying the presence of the adhesive tape on the first substrate by means of a photocell, f) providing a second substrate and g) adhering the second substrate to the first substrate bearing said adhesive tape by means of the second adhesive layer.

FIGURE 3 depicts the steps in the method of attaching the photoluminescent adhesive tape 10 to a substrate 32 and detecting its presence with an optical recognition device 34. The optical recognition 34 device excites the luminescent agent using UV light, represented as 36, and detects the responding emission, depicted as 38. The substrate 32 is shown as supported on a moving assembly line belt 40.

In addition to the photocell, the optical recognition device employed in the present method may also include 1) a means connected to the optical recognition device for automatically stopping an automatic system which applies adhesive tape to a substrate when a substrate bearing no adhesive tape is detected and/or 2) a sorting device for sorting out or deviating substrates where no adhesive tape could be detected.

Optical recognition devices comprising both the excitation light sources and photocells for use in the method of the present invention are commonly available and may be obtained from Erwin Sick AG of Waldkirchen, Germany, among others.

The invention is illustrated but not limited to the following examples. Test methods for verifying the presence of the adhesive tape and measurement of 90° peel adhesion are described first.

### Test methods

### A. Verification of the presence of adhesive tape with an optical recognition device

An optical recognition device capable of promoting and detecting fluorescence was employed for evaluating tapes useful in the present invention. The device is commercially available as Luminescence Detector Model LUT 3-952 from Erwin Sick AG of Waldkirchen, Germany. This device comprised an ultra-violet (UV) light source having an output of UV light having a wavelength of 370 nm for excitation of the luminescent agent. The UV light was modulated at a frequency of ca. 5 kHz

The device also comprised an optical filter (available as Model RG 610 from 952 from Erwin Sick AG of Waldkirchen, Germany) to prevent much of the emission from luminescent agents in the first substrate, a common sheet of letter paper, from reaching the photocell. The filter blocked blue luminescence from the paper substrate and only allowed light having a wavelength of over 610 nm to pass on to the photocell.

The photocell employed in the recognition device was sensitive to visible light in the wavelength range of ca.420 nm to 750 nm. In general terms, the light signal was detected with a photomultiplier tube in which the photon flux from the adhesive tape produces an electrical current that is proportional to the light intensity. Only light that had the same modulation as the UV light from the excitation source was detected by the photocell (phase-sensitive detection). The signal output from the photocell an analog output signal in milliamperes (mA).

Adjustments in the detector sensitivity and selection of an appropriate lens can be used to further optimize the ability of the device to recognize a fluorescent adhesive tape adhered to a substrate.

Detector response values in milliamperes are relative values rather than absolute values as the detector sensitivity was variable. Absolute values of photocell responses in milliamperes were also dependent upon the lens employed with the recognition device and upon the area of adhesive tape from which emissions were gathered.

### B. 90° Peel Adhesion

90° Peel adhesion of the adhesive tapes of the invention were measured according to FINAT (Federation Internationale des Fabricants Europeens et Transformateurs d' Adhesifs et Thermocollants sur Papiers et autres Supports) Method 2 from three surfaces: polyethylene terephthalate (PET), a blend of polyvinyl chloride and acrylonitrile-butadiene-styrene (PVC/ABS) commonly employed in manufacture of credit cards and polycarbonate (PC).

The tape was applied to the substrate, rolled over twice with a 2 kg roller and then peel from the substrate with a dwell time of less than one minute at a speed of 300 mm/min. Each substrate was tested 3 times and the results averaged. Results were recorded in g/cm and converted to N/cm.

### Examples

### Example 1

A sheet of multilayer red, luminous film having a layer of pressure-sensitive adhesive on the non-luminous side (SCOTCHCAL™ 5700, Red) available from 3M Company, St. Paul, Minnesota /USA) was coated on the non-adhesive, luminescent side with a 100 µm thick layer of solvent-borne, repositionable pressure sensitive adhesive. The repositionable adhesive layer was dried in a forced air oven to give a dry thickness of ca. 5 µm. Visual inspection showed that the repositionable adhesive coating appeared to be discontinuous.

The red luminous tape was clearly visible to the eye after it was applied to a paper sheet and was easily detectable by the optical recognition device described above.
Several differing plastic credit cards were adhered to the second layer of exposed adhesive, respectively. These could be removed easily from the paper substrate bearing the adhesive tape, without leaving adhesive residue on the data card.

### Example 2

Polyester (polyethylene terephthalate, PET) film in a thickness of 36 µm was obtained from Toray Plastic Europe S. A. (Miribel Cedex, France) and coated on a first side with a solvent-based fluorescent ink using a 35 µm Meyer bar. The fluorescent ink was obtained from SICPA S. A. (Prilly, Switzerland) as Sicpa # 81A001F at 30% solids in mixture of isopropanol, 1-methoxy-2-propanol and ethanol. The photoluminescent agent in the ink exhibited an ultraviolet (UV) absorption spectrum with a peak at 366 nm and fluorescent emission spectrum with a peak at 530 nm as shown in Figure 2.

The fluorescent ink layer was dried in a forced air at increasing temperatures from 50°C up to 90° C for about 3 minutes. The dry coating weight of the fluorescent ink was ca. 3.5 grams/m². The dried ink layer had an inherent light yellow color under ambient lighting conditions.

A solvent-borne, microsphere-based, repositionable adhesive was then coated over the fluorescent ink layer in the same amount as in Example 1 and dried under the same conditions.

A release liner, comprising a polymer-coated paper provided with a silicone release layer on one side was then laminated to the repositionable adhesive layer.

The second side of the polyethylene terephthalate film backing was then coated with a solvent-based pressure-sensitive adhesive comprising a synthetic rubber (a synthetic block polymer obtainable as Kraton 4111 from Ripplewood Holdings LLC) and a tackifying resin (Escorez 1310 from Exxon Chemicals). The wet coating weight of the adhesive was about 80 µm, resulting in a dry coating weight of ca. 35 µm after drying in a forced air oven at increasing temperatures of from 60°C to 90°C.

### Example 3

Example 2 was repeated with the exception that a layer of fluorescent offset printing ink (transparent) available as 360.011 F (SICPA S. A., Prilly, Switzerland) was employed between the polyester backing layer and the microsphere-based pressure-sensitive adhesive layer. The luminescent agent in this ink had a maximum emission at 550 nm, but had sufficient magnitude of emission at 610 nm (recognition wavelength) to be reliably detectable in comparison to emissions from the substrate and to provide an accurate indication of the presence of the adhesive tape

### Example 4

One side of a 36 µm polyester film was then coated with a solvent borne repositionable acrylic pressure-sensitive adhesive and dried in a forced air oven to give a dry coating thickness of ca. 12 µm. The exposed adhesive was then covered with a release liner.

The opposite side of the polyester backing was then coated with a 30% solids luminescent ink Sicpa 81A001F (SICPA S. A., Prilly, Switzerland) at a wet thickness of 12 µm and dried in a forced air oven to give a dry thickness of ca. 4 µm. A layer of solvent-based rubber resin pressure-sensitive adhesive comprising a synthetic block polymer (Kraton 4111) and a tackifying resin (Escorez 1310) was then coated over the dried ink and dried to give a dry adhesive thickness of 35 µm.

The side of the adhesive tape bearing the fluorescent ink layer and the rubber-resin-based adhesive layer was then adhered to an A4-size sheet of multipurpose office paper. The adhesive tape was then exposed to UV radiation from the optical recognition device described above in the examples. A photocell response of 9.4 milliamperes was measured. This response was sufficient to differentiate the adhesive tape from the paper to which it was adhered and to give a definite indication of the presence of the adhesive tape.

The adhesive tape construction and the photocell response for the tape of Example 4 are summarized in Table 2 below.

The adhesive tape of Example 4 was evaluated for 90° peel adhesion from the three substrates described in the Test Method above. Results are summarized in Table 1.

**Table 1**

| | 90° Peel adhesion (N/cm) | | |
|---|---|---|---|
| | PET | PVC/ABS | PC |
| Example 4 | 0.26 | 0.40 | 0.40 |

### Examples 5-8

Example 4 was repeated with the exception that the thickness of the fluorescent ink layer and the acrylic repositionable adhesive layer were varied to produce the layer having the thickness shown in Table 1.

These adhesive tapes were also adhered to a paper sheet in the manner described in Example 4 and then evaluated for their photocell response. Results are summarized in Table 1. Each of the adhesive tapes of Examples 5-8 showed sufficient response from the optical recognition device to clearly indicate the presence of the adhesive tape.

### Examples 9

Example 4 was repeated with the exception that the acrylic adhesive was a water-borne pressure-sensitive adhesive commercially available as RHODOTAK 397 from Rhodia SA, Boulogne-Billancourt, France. The 50% solids adhesive dispersion was coated at a wet coating thickness of 50 µm and dried in a forced air oven to give a dry coating thickness of ca. 25 µm.

This tape was also evaluated by adhering the rubber-resin PSA side of the adhesive tape to a sheet of multipurpose office paper and measuring the relative value of fluorescence at 610 nm using the method described above. A value of 5.3 milliamperes was recorded as shown in Table 1

### Examples 10-11

Example 9 was repeated with the exception that the acrylic adhesive comprised 10% by weight hollow glass microspheres. In Example 10, the repositionable adhesive comprised 10% by weight glass bubbles having a particle size range of ca. 30-115 µm (available as Scotchlite™ K Series Glass Bubbles (K15) from 3M Company, St. Paul, MN, USA). In Example 11, the adhesive comprised 10% by weight glass bubbles having a particle size range of ca. 20-85 µm (available as VS 5500 from 3M Company, St. Paul, MN, USA).

Photocell responses to the adhesive tapes of Examples 10-11 (in milliamperes) are summarized in Table 2.

**Table 2**

| Ex. | Adh. 1 | Backing | Adh. 2 | Luminesc. ink type | Thickness of ink, µm | Photocell response, mA |
|---|---|---|---|---|---|---|
| 4 | A, 35 µm | PET, 36 µm | B, 12 µm | Sicpa 81A001F | 4 | 9.4 |
| 5 | A, 35 µm | PET, 36 µm | B, 8 µm | Sicpa 81A001F | 4 | 7.3 |
| 6 | A, 35 µm | PET, 36 µm | B, 5 µm | Sicpa 81A001F | 4 | 6.6 |
| 7 | A, 35 µm | PET, 36 µm | B, 10 µm | Sicpa 81A001F | 8 | 6.4 |
| 8 | A, 35 µm | PET, 36 µm | B, 10 µm | Sicpa 81A001F | 2 | 6.2 |
| 9 | A, 35 µm | PET, 36 µm | C, 25 µm | Sicpa 81A001F | 2 | 5.3 |
| 10 | A, 35 µm | PET, 36 µm | C, 25 µm* | Sicpa 81A001F | 2 | 6.6 |
| 11 | A, 35 µm | PET, 36 µm | C, 25 µm** | Sicpa 81A001F | 2 | 6.4 |
| C1 | -- | Office Paper | -- | -- | -- | 0.2 |
| A synthetic rubber-resin based pressure-sensitive adhesive B solvent-borne, microsphere-based, acrylic pressure-sensitive adhesive C RHODOTAK 397, waterborne acrylic pressure-sensitive adhesive | | | | | | |

| | | | | | | |
|---|---|---|---|---|---|---|
| * including 10% by weight glass bubbles K15 | | | | | | |
| ** including 10% by weight glass bubbles VS 5500 | | | | | | |

### Comparative Example 1

Multipurpose office paper was evaluated using the optical recognition device described in the examples. A current from the photocell of 0.2 mA was measured.

## Claims

1. Photoluminescent adhesive tape, having a first layer of exposed adhesive attachable to a first substrate, a backing layer and a second layer of exposed adhesive attachable to a second substrate, where the second layer of exposed adhesive comprises a pressure-sensitive adhesive being selected so that the tape can be removed according to FINAT Method 2 (90° peel adhesion) from the second substrate without leaving any residue, and said tape comprising at least one photoluminescent agent.

2. Photoluminescent tape according to claim 1 wherein the second layer of pressure-sensitive adhesive is selected so that the tape can be removed according to FINAT Method 2 (90° peel adhesion) from a polycarbonate substrate without leaving any residue.

3. Photoluminescent tape according to any of claims 1-2 wherein the photoluminescent agent is present is such an amount and located in such a geometrical arrangement so that the responding photoluminescent radiation generated by the tape, upon exposure to electromagnetic radiation, is recognizable with a recognition device comprising a photocell.

4. Photoluminescent adhesive tape according to any of claims 1-3 comprising one or more photoluminescent agents in a concentration of at least 0.001 wt. % with respect to the mass of the adhesive tape.

5. Photoluminescent adhesive tape according to any of claims1-4, where the adhesive tape splits cohesively within one of the non-exposed layer or at one of the interfaces between two adjacent non-exposed layers of the tape when the adhesive tape is bonded between two substrates to form an assembly and when separation forces are applied to the two substrates.

6. Photoluminescent adhesive tape according to any of claims 1-5, where an additional non-exposed layer comprises a photoluminescent agent.

7. Photoluminescent adhesive tape according to any one of the claims 1-6, where the photoluminescent agent is fluorescent.

8. Photoluminescent adhesive tape according to any one of the claims 1-6 where the photoluminescent agent is phosphorescent.

9. Photoluminescent adhesive tape according to any of the claims 1-8, where said first adhesive layer is selected from the group of acrylate-based pressure-sensitive adhesives and rubber-resin-based pressure-sensitive adhesives.

10. Photoluminescent adhesive tape according to any of the claims 1-9, where the peel adhesion of the first adhesive layer from a first substrate is greater than the peel adhesion of the second adhesive from a second substrate by at least 1 N/cm, where the peel adhesion is measured according to FINAT Method 2 (90° peel adhesion).

11. Photoluminescent adhesive tape according to claim 10 where the peel adhesion of the second pressure-sensitive adhesive layer from the second substrate is not greater than about 2.0 N/cm, where the peel adhesion is measured according to FINAT Method 2 (90° peel adhesion).

12. An assembly comprising a first substrate and second substrate, where said substrates are adhered to one another by means of the adhesive tape according to any one of the claims 1-11.

13. An assembly according to claim 12, where the second substrate is a data card.

14. Method of adhering two substrates to each other comprising the steps of:
a) providing a first substrate,
b) providing a photoluminescent adhesive tape of any of the claims 1-11,
c) adhering said adhesive tape to the first substrate by means of the first exposed adhesive surface,
d) exposing the photoluminescent adhesive tape to electromagnetic radiation capable of exciting the photoluminescent agent,
e) verifying the presence of the adhesive tape on the first substrate by means of a photocell,
f) providing a second substrate and
g) adhering the second substrate to the first substrate bearing said adhesive tape by means of the second adhesive layer.
